# EUROPÄISCHE PATENTSCHRIFT

(11) **EP 1 288 096 B1**
(45) Veröffentlichungstag und Bekanntmachung des Hinweises auf die Patenterteilung: **13.07.2005**
(21) Anmeldenummer: 02019277.9
(22) Anmeldetag: 28.08.2002
(51) Int. Cl.: B61D 37/00, B60N 3/00, F16B 21/16

(54) **Fahrgasttisch für Fahrzeuge, insbesondere Reisezugwagen**
Table for passengers for vehicles, especially for railway carriages
Table pour passagers pour véhicules, notamment pour voitures à voyageurs

(30) Priorität: 31.08.2001 DE 10142771
(43) Veröffentlichungstag der Anmeldung: 05.03.2003
(73) Patentinhaber: SIEMENS AKTIENGESELLSCHAFT, 80333 München (DE)
(72) Erfinder: Weiler, Joachim, 53498 Gönnersdorf (DE)

(56) Entgegenhaltungen:
- AT-B- 404 620
- DE-A- 19 835 103
- GB-A- 2 077 842
- GB-A- 2 224 923
- US-A- 4 442 993

## Beschreibung

Die Erfindung betrifft einen Fahrgasttisch für Fahrzeuge, insbesondere Reisezugwagen, dessen Tischplatte über zumindest ein Befestigungselement, das ein Innenteil und ein Außenteil aufweist, mit einer Fahrzeugwand zu verbinden ist.

Bei einem durch die DE 198 35 103 A1 bekannten Tisch für Schienenfahrzeuge weist die Tischplatte wandseitig ein Befestigungselement auf, das aus einem Innenteil, einem Außenteil und einem - im Hinblick auf eine thermische Isolation - zwischen diesen beiden Teilen angeordneten Körper aus Gummi oder Kunststoff gebildet ist. Die Tischplatte und das Außenteil des Befestigungselements sind miteinander verbunden. Das Innenteil des Befestigungselements ist über eine Schraubverbindung an der Fahrzeugwand anschließbar, vorzugsweise an einer dort befindlichen C-Schiene. Diese Bauweise ergibt eine feste, unlösbare Anbringung der Tischplatte an der Fahrzeugwand.

Die Erfindung geht von der Erkenntnis aus, daß es speziell bei Fahrzeugen mit einer im Betrieb variabel veränderbaren Anordnung der Fahrgastsitze (Position "Jet-Bestuhlung" ober Position "Vis-a-Vis-Bestuhlung") wünschenswert ist, die Fahrgasttische den Sitzpositionen entsprechend zu plazieren. Der Erfindung liegt daher die Aufgabe zugrunde, durch möglichst einfache Mittel den Fahrgasttisch zwar stabil, jedoch leicht abnehmbar und an anderer Stelle anbringbar mit der Fahrzeugwand zu verbinden.

Diese Aufgabe wird erfindungsgemäß dadurch gelöst, dass das Innenteil und das Außenteil des Befestigungselements durch eine formschlüssig ausgebildete Kupplung miteinander verriegelt sind, wobei diese Kupplung mit Hilfe eines manuell bedienbaren Betätigungsmittels trennbar ist.

Vorteilhafte Ausgestaltungen der Erfindung sind in den Unteransprüchen angegeben.

Im weiteren wird die Erfindung anhand eines Ausführungsbeispiels näher beschrieben, das in der Zeichnung prinzipartig dargestellt ist. Es zeigen
- Fig. 1: den Seitenwandbereich eines Schienenfahrzeuges mit einem Fahrgasttisch im Querschnitt,
- Fig. 2: die Draufsicht zu Fig. 1, teilweise im Schnitt.

Eine hier nur teilweise gezeichnete Tischplatte 1 eines Fahrgasttisches ist über zwei Befestigungselemente, die auf einer gemeinsamen Befestigungsplatte 7 angeordnet sind, mit einer Fahrzeugwand 4 verbunden. Die Fahrzeugwand 4 ist mit einer Innenverkleidung 4a versehen. Die Befestigungselemente haben jeweils ein mit der Tischplatte 1 verbundenes Innenteil 2 und ein an der Fahrzeugwand 4 gehaltenes Außenteil 3. Diese beiden Teile 1 und 2 sind durch eine Kupplung 5 miteinander verriegelt. Die Kupplung 5 weist eine Anzahl von Kugeln 5a auf, die jeweils - im Sinne der Verriegelung - einerseits mit einer Querbohrung 2a des Innenteils 2 und andererseits mit einer inneren Nut 3a des Außenteils 3 zusammenwirken.

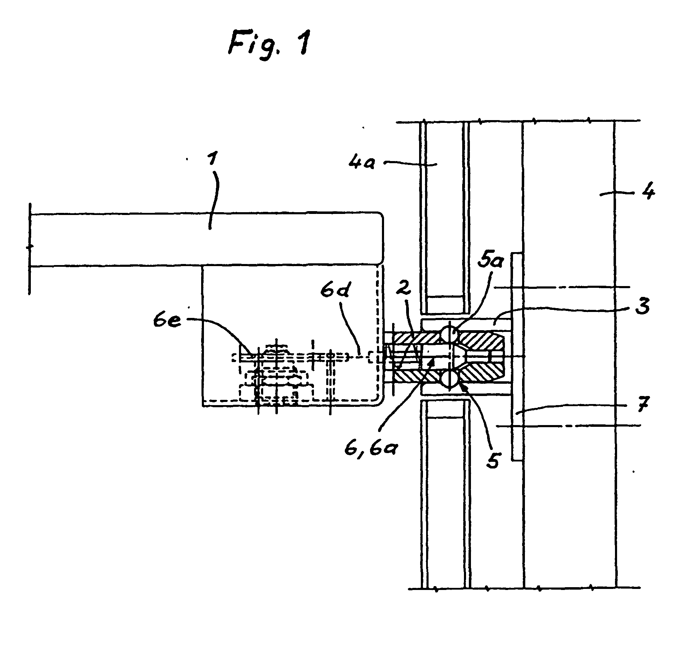

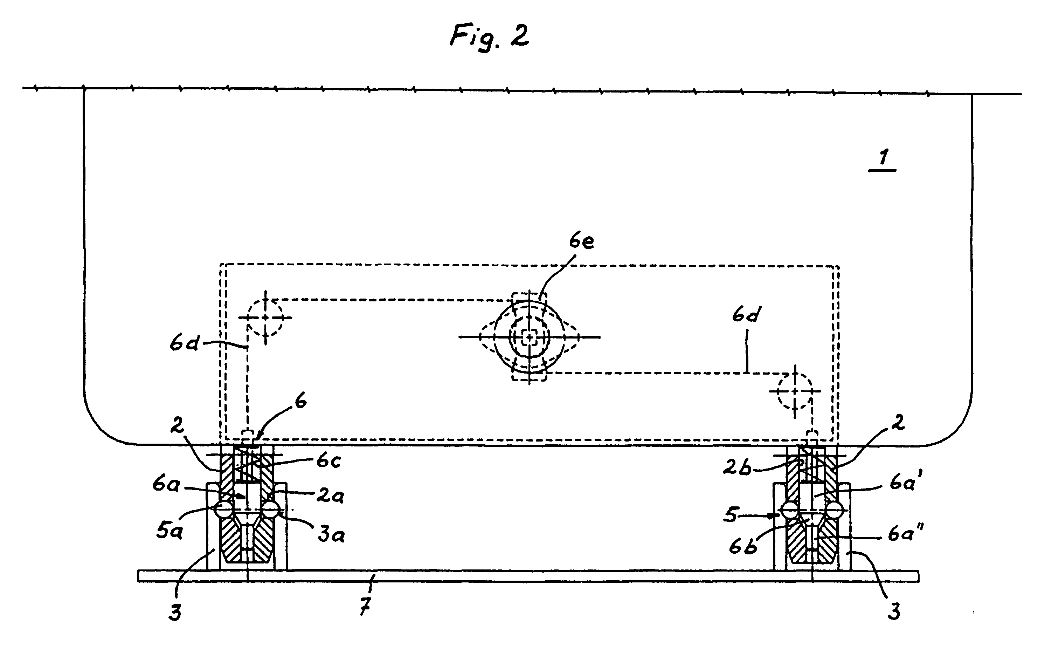

Um den Fahrgasttisch von der Fahrzeugwand 4 abnehmen zu können und mit an anderer Stelle der Fahrzeugwand 4 befindlichen Außenteilen 3 zu verbinden, ist die Kupplung 5 mit Hilfe eines manuell bedienbaren Betätigungsmittels 6 trennbar. Das Betätigungsmittel 6 weist einen abgesetzten Bolzen 6a auf, der in eine zentrale, gleichfalls abgesetzte Bohrung 2b des Innenteils 2 längsverschiebbar eingreift. Der Bolzen 6a fixiert in seiner ersten, vorgeschobenen Stellung (siehe Fig. 1 und 2) über den dickeren Bolzenabschnitt 6a' die Kugeln 5a der Kupplung 5 in ihrer Wirkverbindung mit der Nut 3a des Außenteils 3. Der Bolzen 6a ist gegen die Kraft einer Feder 6c, die ihn in Richtung auf die vorgenannte erste Position beaufschlagt, in eine zweite, zurückgezogene Position verschiebbar, in der sein dünnerer Bolzenabschnitt 6a" die Kugeln 5a aus ihrer Wirkverbindung mit der Nut 3a des Außenteils 3 freigibt. Für dieses Verschieben greift am Bolzen 6a ein Seilzug 6d an. Um bei dem Fahrgasttisch mit zwei Befestigungselementen gleichzeitig beide Bolzen 6a in ihre entkuppelte zweite Position zu verschieben, sind die Seilzüge 6d mit einem gemeinsamen Betätigungshebel 6e verbunden, der beispielsweise durch ein Vierkant-Werkzeug bedient werden kann.

Das Wiedereinführen des Bolzens 6a in seine erste Position, also zwischen die Kugeln 5a der Kupplung 5, wird durch einen konusförmigen Übergang 6b erleichtert, der zwischen dem dickeren Abschnitt 6a' und dem dünneren Abschnitt 6a" angeordnet ist.

### Liste der Bezugszeichen

- 1: Tischplatte
- 2: Innenteil
- 2a: Querbohrung
- 2b: zentrale Bohrung
- 3: Außenteil
- 3a: innere Nut
- 4: Fahrzeugwand
- 4a: Innenverkleidung
- 5: Kupplung
- 5a: Kugel
- 6: Betätigungsmittel
- 6a: abgesetzter Bolzen
- 6a': dickerer Bolzenabschnitt
- 6a": dünnerer Bolzenabschnitt
- 6b: konusförmiger Übergang
- 6c: Feder
- 6d: Seilzug
- 6e: gemeinsamer Betätigungshebel
- 7: Befestigungsplatte

## Patentansprüche

1. Fahrgasttisch für Fahrzeuge, insbesondere Reisezugwagen, dessen Tischplatte (1) über zumindest ein Befestigungselement, das ein Innenteil (2) und ein Außenteil (3) aufweist, mit einer Fahrzeugwand (4) zu verbinden ist, **dadurch gekennzeichnet, dass** das Innenteil (2) und das Außenteil (3) des Befestigungselements durch eine formschlüssig ausgebildete Kupplung (5) miteinander verriegelt sind, wobei diese Kupplung (5) mit Hilfe eines manuell bedienbaren Betätigungsmittels (6) trennbar ist.

2. Fahrgasttisch nach Anspruch 1, **dadurch gekennzeichnet, dass** die Kupplung (5) eine Anzahl von Kugeln (5a) aufweist, die jeweils einerseits mit einer Querbohrung (2a) des mit der Tischplatte (1) verbundenen Innenteils (2) und andererseits mit einer inneren Nut (3a) des an der Fahrzeugwand (4) befestigten Außenteils (3) zusammenwirken.

3. Fahrgasttisch nach Anspruch 2, **dadurch gekennzeichnet, dass** das Betätigungsmittel (6) einen abgesetzten Bolzen (6a) aufweist, der in eine zentrale Bohrung (2b) des Innenteils (2) längsverschiebbar eingreift, wobei der Bolzen (6a) in seiner ersten, vorgeschobenen Position über den dickeren Bolzenabschnitt (6a') die Kugeln (5a) der Kupplung (5) in ihrer Wirkverbindung mit der Nut (3a) des Außenteils (3) fixiert und in seiner zweiten, zurückgezogenen Position über den dünneren Bolzenabschnitt (6a") die Kugeln (5a) aus der vorgenannten Wirkverbindung freigibt.

4. Fahrgasttisch nach Anspruch 3, **dadurch gekennzeichnet, dass** zwischen dem dickeren Abschnitt (6a') und dem dünneren Abschnitt (6a") des Bolzens (6a) ein konusförmiger Übergang (6b) angeordnet ist.

5. Fahrgasttisch nach Anspruch 3 oder 4, **dadurch gekennzeichnet, dass** der Bolzen (6a) durch eine Feder (6c) in Richtung auf seine erste, vorgeschobene Position beaufschlagt ist.

6. Fahrgasttisch nach einem der Ansprüche 3 bis 5, **dadurch gekennzeichnet, dass** das Betätigungsmittel (6) einen am Bolzen (6a) angreifenden Seilzug (6d) aufweist.

7. Fahrgasttisch nach Anspruch 6, **dadurch gekennzeichnet, dass** der am Bolzen (6a) angreifende Seilzug (6d) und ein weiterer, einem zweiten Befestigungselement der Tischplatte (1) zugehöriger Seilzug (6d) mit einem gemeinsamen Betätigungshebel (6e) verbunden sind.

8. Fahrgasttisch nach einem der Ansprüche 1 bis 7, **dadurch gekennzeichnet, dass** für den Fahrgasttisch zwei Befestigungselemente vorgesehen sind, deren Außenteile (3) auf einer gemeinsamen Befestigungsplatte (7) angeordnet sind.

## Claims

1. Table for passengers for vehicles, especially for railway carriages, the table top (1) of which is to be connected to a vehicle wall (4) via at least one fastening element, which has an inner part (2) and an outer part (3), **characterized in that** the inner part (2) and the outer part (3) of the fastening element are locked to each other by means of a coupling (5) of form-fitting design, with it being possible for this coupling (5) to be separated with the aid of a manually operable actuating means (6).

2. Table for passengers according to Claim 1, **characterized in that** the coupling (5) has a number of balls (5a) which interact in each case on the one hand with a transverse hole (2a) of the inner part (2), which is connected to the table top (1), and on the other hand with an inner groove (3a) of the outer part (3), which is fastened to the vehicle wall (4).

3. Table for passengers according to Claim 2, **characterized in that** the actuating means (6) has an offset bolt (6a) which engages in a longitudinally displaceable manner in a central hole (2b) of the inner part (2), the bolt (6a), in its first, pushed-forward position, using the thicker bolt section (6a') to fix the balls (5a) of the coupling (5) in their operative connection with the groove (3a) of the outer part (3) and, in its second, pulled-back position, using the thinner bolt section (6a") to release the balls (5a) from the abovementioned operative connection.

4. Table for passengers according to Claim 3, **characterized in that** a conical transition (6b) is arranged between the thicker section (6a') and the thinner section (6a") of the bolt (6a).

5. Table for passengers according to Claim 3 or 4, **characterized in that** the bolt (6a) is pressed by a spring (6c) in the direction of its first, pushed-forward position.

6. Table for passengers according to one of Claims 3 to 5, **characterized in that** the actuating means (6) has a cable pull (6d) acting on the bolt (6a).

7. Table for passengers according to Claim 6, **characterized in that** the cable pull (6d) acting on the bolt (6a) and a further cable pull (6d), which belongs to a second fastening element of the table top (1), are connected to a common actuating lever (6e).

8. Table for passengers according to one of Claims 1 to 7, **characterized in that** two fastening elements are provided for the table for passengers, the outer parts (3) of which elements are arranged on a common fastening plate (7).

## Revendications

1. Table de passager pour des véhicules, en particulier des voitures de voyageurs, dont le plateau de table (1) peut être relié à la paroi de véhicule (4) par au moins un élément de fixation muni d'une partie intérieure (2) et d'une partie extérieure (3),
**caractérisée en ce que** la partie intérieure (2) et la partie extérieure (3) de l'élément de fixation sont verrouillées l'une à l'autre par combinaison de formes à l'aide d'un couplage (5), ce couplage (5) pouvant être séparé à l'aide d'un moyen de manoeuvre à commande manuelle (6).

2. Table de passager selon la revendication 1, **caractérisée en ce que** le couplage (5) présente un certain nombre de billes (5a) qui interagissent chacune d'une part avec un perçage transversal (2a) de la partie intérieure (2) reliée au plateau de table (1) et d'autre part avec une rainure intérieure (3a) de la partie extérieure (3) fixée à la paroi de véhicule (4).

3. Table de passager selon la revendication 2, **caractérisée en ce que** le moyen de manoeuvre (6) présente une cheville décalée (6a) qui pénètre dans un perçage (2b) central de la partie intérieure (2) pour permettre un déplacement longitudinal, dans sa première position avant la cheville (6a) maintient les billes (5a) du couplage (5) en liaison active avec la rainure (3a) de la partie extérieure (3) grâce au segment assez épais de cheville (6a') et dans sa deuxième position arrière elle libère, par l'intermédiaire de son segment assez mince de cheville (6a"), les billes (5a) de leur susdite liaison active avec la rainure (3a) de la partie extérieure (3).

4. Table de passager selon la revendication 3, **caractérisée en ce qu'**une transition conique (6b) est placée entre le segment assez épais (6a') et le segment assez mince (6a") de la cheville (6a).

5. Table de passager selon la revendication 3 ou 4, **caractérisée en ce que** la cheville (6a) est actionné par un ressort (6c) en direction de sa première position avant.

6. Table de passager selon l'une des revendications 3 à 5, **caractérisée en ce que** le moyen de manoeuvre (6) présente un câble (6d) appliqué à la cheville (6a).

7. Table de passager selon la revendication 6, **caractérisée en ce que** le câble (6d) appliqué à la cheville (6a) et un autre câble (6d) qui fait partie d'un deuxième élément de fixation du plateau de table (1) sont reliés à un levier de manoeuvre (6e) commun.

8. Table de passager selon l'une des revendications 1 à 7, **caractérisée en ce que** pour la table de passager on prévoit deux éléments de fixation dont les parties extérieures (3) sont disposées sur une plaque de fixation (7) commune.
